# FASCICULE DE BREVET EUROPEEN

(11) **EP 3 232 526 B1**
(45) Date de publication et mention de la délivrance du brevet: **02.06.2021**
(21) Numéro de dépôt: 17154930.6
(22) Date de dépôt: 07.02.2017
(51) Int. Cl.: H02H 3/33, H02H 3/347

(54) **DISPOSITIF DE DÉTECTION D'UN COURANT DE DÉFAUT**
VORRICHTUNG ZUR DETEKTION EINES FEHLERSTROMS
DEVICE FOR DETECTING A FAULT CURRENT

(30) Priorité: 12.04.2016 FR 1653183
(43) Date de publication de la demande: 18.10.2017
(73) Titulaire: Schneider Electric Industries SAS, 92500 Rueil-Malmaison (FR)
(72) Inventeur: ALLAB, Farid, 38050 GRENOBLE (FR); STEPANEK, Jiri, 38050 GRENOBLE (FR); CADOUX, Yvan, 38050 GRENOBLE (FR)
(74) Mandataire: Tripodi, Paul

(56) Documents cités:
- EP-A2- 0 356 344
- US-A- 3 786 356
- US-A- 3 879 639
- US-A- 4 280 162
- US-A- 4 307 429

## Description

### DOMAINE TECHNIQUE

L'invention concerne un dispositif de détection d'un courant de défaut circulant dans une ligne de courant d'une installation électrique.

L'invention concerne aussi un appareil électrique de protection différentielle comportant un tel dispositif de détection ainsi qu'un ensemble de dispositifs de protection différentielle.

### ETAT DE LA TECHNIQUE

Les dispositifs de détection d'un courant de défaut alternatif sont utilisés très largement dans les installations électriques alimentées par des réseaux alternatifs. Leur fonction est de détecter tout courant de défaut, appelé aussi courant de fuite, circulant généralement entre le réseau électrique et la terre ou la masse de l'installation. Un courant de défaut est la manifestation d'un défaut d'isolement du réseau par rapport à la terre et doit être éliminé avant que des dommages puissent avoir lieu. Ces dispositifs font partie des installations électriques industrielles ou domestiques.

Avec le développement des charges électroniques, par exemple les stations de recharge de véhicules électriques ou la production d'électricité par des panneaux photovoltaïques, la nature des courants de défaut a changé : la présence de redresseurs électroniques, de convertisseurs de tension ou de fréquence est à l'origine de l'apparition de courants de défaut continus ou puisés. Les dispositifs de détection de courant de défaut purement alternatif ne sont pas suffisamment sensibles aux courants continus ou puisés. Dans les installations électriques dans lesquelles sont implantés des charges électroniques, il est donc nécessaire d'installer des dispositifs de protection adaptés à la détection de tout type de courant alternatif, continu ou pulsé.

Une contrainte d'implantation de ces dispositifs de protection est la nécessité de détecter un courant de défaut relativement faible, par exemple 30 mA, dans une installation électrique ou circulent des courants de quelques ampères à plusieurs dizaines d'ampères. Pour cela, l'utilisation d'un tore sommateur est particulièrement intéressante puisque le circuit magnétique du tore effectue la sommation des champs magnétiques générés par les courants circulant dans chaque conducteur de la ligne de courant. Le champ résultant est uniquement l'image du déséquilibre de courant de toutes les phases. Un enroulement bobiné sur le circuit magnétique permet de mesurer ce déséquilibre de courant, appelé courant différentiel.

Une difficulté importante est de mesurer un courant continu avec un tore constitué d'un circuit magnétique. Différents moyens sont employés pour résoudre ce problème.

La demande de brevet EP 0 069 655 A1 ou le brevet US 4 280 162 A décrivent un dispositif de protection pouvant détecter en permanence une mise à la terre du neutre et des courants de défaut phase-terre alternatif ou continu par la détection d'un décalage de l'état magnétique du tore dans lequel un oscillateur génère un champ magnétique alternatif.

La demande de brevet EP 1 533 880 A1 décrit un dispositif et un procédé de protection différentielle sensible aux courants différentiels continus ou comportant une composante continue, tout en évitant des déclenchements indésirables pour certaines fréquences de courant de défaut. Pour cela, la détection de défaut doit être confirmée pour différentes fréquences d'excitation du circuit magnétique.

La demande de brevet EP 1 267 467 A2 met en œuvre deux transformateurs de courant : un premier pour générer un premier champ magnétique sur lequel est superposé le champ magnétique créé par un courant de défaut, un second transformateur de courant, relié au premier transformateur de courant par un circuit dans lequel est inséré un circuit produisant une rotation de phase d'environ 180°, ce circuit étant agencé en filtre passe-haut.

L'utilisation de deux transformateurs de courant est intéressante puisque le champ résultant est toujours minimisé et par conséquent est peu sensible à la saturation des circuits magnétiques. Cependant, un inconvénient notable est l'encombrement et le coût induit par l'utilisation de deux circuits magnétiques.

Le principe de fonctionnement des dispositifs connus utilisant un seul circuit magnétique demande un dimensionnement adapté du circuit magnétique pour que celui-ci ne soit pas saturé pour un courant de défaut égal au seuil de déclenchement le plus élevé. De plus, pour des raisons de forte dispersion des caractéristiques des matériaux magnétiques et pour être sûr d'un fonctionnement du produit au niveau du seuil de déclenchement le plus élevé, le circuit magnétique est généralement surdimensionné. Cela présente donc l'inconvénient d'être plus encombrant et plus cher.

L'invention a pour but de détecter un courant de défaut alternatif, continu ou pulsé à l'aide d'un seul circuit magnétique ainsi que la détection par un moyen économique et peu encombrant de la saturation dudit circuit magnétique. L'invention est particulièrement adaptée à une utilisation dans un dispositif de protection différentielle d'une installation électrique basse tension.

### EXPOSE DE L'INVENTION

Selon l'invention, définie par la revendication 1, un dispositif de détection d'un courant de défaut circulant dans une ligne de courant comprend :
- un capteur de courant formé d'un circuit magnétique traversé par la ligne de courant, celle-ci formant un primaire, ledit capteur comportant un premier enroulement secondaire bobiné sur le circuit magnétique,
- un générateur connecté au premier enroulement secondaire pour lui délivrer un signal électrique alternatif,
- un circuit de mesure pour mesurer un courant circulant dans l'enroulement secondaire,
- un circuit de traitement, connecté au circuit de mesure du courant, pour fournir un premier signal de défaut lorsque ladite mesure du courant dépasse un seuil,
et comporte un circuit de contrôle :
- pour contrôler le signal électrique délivré par le générateur, et
- pour fournir un second signal de défaut lorsque ledit signal électrique est représentatif d'une saturation du circuit magnétique ou en cas de défaillance du générateur.

Préférentiellement, le dispositif détecte une saturation du circuit magnétique représentative d'un courant de défaut d'amplitude supérieure à un seuil de saturation.

Avantageusement, le circuit de contrôle mesure l'amplitude du courant du signal électrique délivré par le générateur et fournit le second signal de défaut représentatif d'une saturation du circuit magnétique quand ladite amplitude est supérieure ou égale à un seuil haut.

Selon un mode de réalisation, le circuit de contrôle mesure la tension du signal électrique aux bornes de l'enroulement secondaire et fournit le second signal de défaut représentatif d'une saturation du circuit magnétique quand ladite tension est inférieure ou égale à un seuil bas.

Préférentiellement, le circuit de contrôle mesure la fréquence du signal électrique délivré par le générateur et fournit le second signal de défaut représentatif d'une saturation du circuit magnétique quand ladite fréquence est située dans une bande de fréquences prédéfinie.

Préférentiellement, le circuit de contrôle mesure l'amplitude du courant du signal électrique délivré par le générateur et fournit le second signal de défaut représentatif d'un défaut du générateur quand ladite amplitude est inférieure à un seuil bas prédéfini.

Selon un autre mode de réalisation, le circuit de contrôle mesure une variation de flux en fonction du temps dans le circuit magnétique et fournit le second signal de défaut représentatif d'une saturation du circuit magnétique quand ladite variation de flux est inférieure à un seuil bas prédéfini.

La mesure de la variation de flux dans le circuit magnétique est préférentiellement réalisée au moyen d'un second enroulement secondaire bobiné sur le circuit magnétique.

Préférentiellement, le dispositif comporte un limiteur de courant limitant l'amplitude du courant du signal électrique délivré par le générateur à une valeur haute prédéfinie.

Le générateur est préférentiellement auto-oscillant.

Avantageusement, le dispositif comporte une inductance connectée en série entre le générateur et le premier enroulement secondaire pour fixer la fréquence d'oscillation du générateur dans la bande de fréquence prédéfinie quand le circuit magnétique est saturé.

Avantageusement, le second signal de défaut active un dispositif de signalisation de défaut, un relais de commande ou un module de communication.

L'invention porte aussi sur un appareil électrique de protection différentielle comportant :
- des éléments de raccordement à un réseau électrique et des éléments de raccordement à une ou plusieurs charges électriques,
- un dispositif de coupure de la ligne de courant disposé entre les éléments de raccordement au réseau électrique et les éléments de raccordement de la ou des charges électriques, ledit dispositif de coupure comportant des contacts électriques,
- un mécanisme de commande d'ouverture des contacts électriques, et
- un dispositif de détection d'un courant de défaut tel que défini précédemment et tel que le mécanisme de commande d'ouverture des contacts est activé par le premier signal de défaut ou par le second signal de défaut.

L'invention porte aussi sur un ensemble de protection différentielle comportant :
- des éléments de raccordement au réseau électrique et des éléments de raccordement à une ou plusieurs charges électriques,
- un dispositif de coupure de la ligne de courant disposé entre les éléments de raccordement au réseau électrique et les éléments de raccordement de la ou des charges électriques, ledit dispositif de coupure comportant des contacts électriques,
- un mécanisme de commande d'ouverture des contacts électriques,
   ledit ensemble étant formé par un assemblage :
   - d'un premier dispositif de détection d'un courant de défaut tel que défini précédemment,
   - d'un second dispositif de protection différentielle agencé pour fournir un signal de défaut, et
   tel que le mécanisme de commande d'ouverture des contacts est activé par le premier signal de défaut ou par le second signal de défaut du premier dispositif ou par le signal de défaut du second dispositif de protection différentielle.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma bloc d'un dispositif de détection de courant de défaut selon un premier mode de réalisation de l'invention ;
- les figures 2a, 2b, 2c représentent des signaux de courant dans le dispositif respectivement en l'absence d'un courant de défaut, en présence d'un courant de défaut et en situation de saturation d'un circuit magnétique ;
- la figure 3 représente un schéma détaillé d'un appareil de protection différentielle comportant un dispositif de détection de courant de défaut selon le premier mode de réalisation de l'invention ;
- la figure 4 représente un schéma bloc d'un dispositif de détection de courant de défaut selon un second mode de réalisation ;
- la figure 5 représente un schéma détaillé d'un appareil de protection différentielle comportant un dispositif de détection de courant de défaut selon le second mode de réalisation de l'invention ;
- la figure 6 représente un schéma bloc d'un ensemble de protection différentielle comportant un appareil de protection différentielle selon un mode de réalisation de l'invention.

### DESCRIPTION DETAILLEE DE MODES DE REALISATION PREFERES

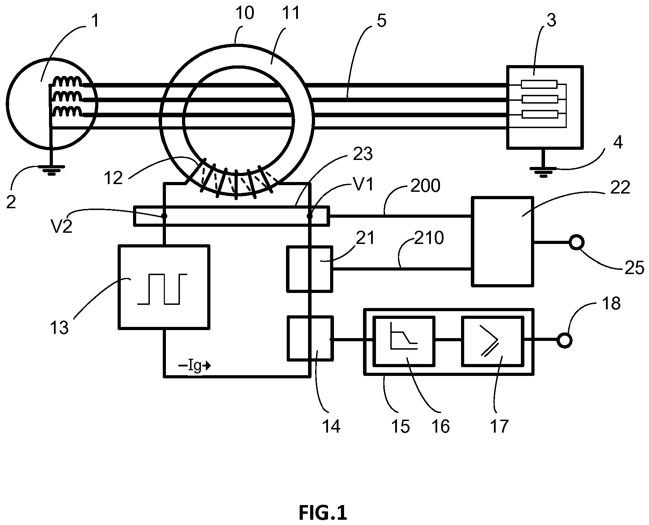

La figure 1 représente un schéma bloc d'un dispositif de détection de courant de défaut selon un premier mode de réalisation de l'invention. Un réseau d'alimentation électrique 1 alimente une ou plusieurs charges 3 au moyen d'une ligne de courant 5 formée d'au moins un conducteur de courant. Le réseau d'alimentation électrique 1 peut être un réseau de distribution publique triphasé, par exemple de tension 400 Volt et de fréquence 50 Hz, dont le neutre est relié à une terre 2 et distribué avec les phases comme représenté sur la figure 1. La ligne de courant 5 comporte dans ce cas quatre conducteurs de courant. Quand le conducteur de neutre n'est pas distribué, la ligne de courant comporte trois conducteurs de courant. Le réseau 1 peut être également un convertisseur de tension ou de fréquence. Le réseau 1 peut aussi être une source photovoltaïque de tension continue. Dans ce cas, la ligne de courant 5 comporte deux conducteurs de courant, un conducteur de polarité positive et un conducteur de polarité négative. La charge 3 peut être un récepteur électrique industriel tel un moteur associé avec un variateur de vitesse ou représenter un ensemble de charges électriques présentes dans un bâtiment industriel ou d'habitation. Afin d'assurer la protection des personnes contre les défauts d'origine électrique, l'enveloppe de la charge 3 est reliée à une terre 4. La terre 2 et la terre 4 sont au même potentiel électrique.

En cas de défaut d'isolement de la charge 3, un courant de défaut pourra s'écouler dans la terre. Ce courant de défaut suivra une boucle : réseau d'alimentation 1, ligne de courant 5, charge 3, liaison terre 4, et retournera au réseau d'alimentation via la liaison terre 2. Le dispositif de détection d'un courant de défaut est destiné à détecter ce courant de défaut et à fournir un signal de défaut ou commander un mécanisme permettant d'ouvrir la liaison électrique entre le réseau d'alimentation 1 et la charge 3.

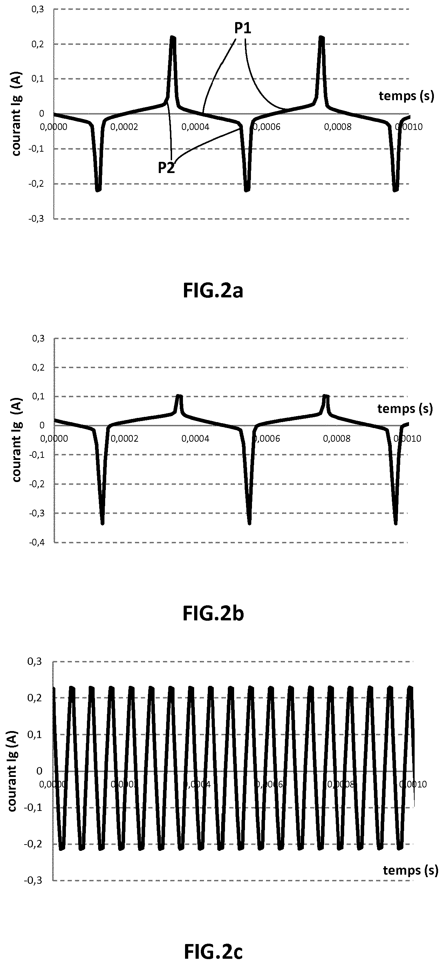

Le dispositif de détection d'un courant de défaut est basé sur le principe d'un capteur à circuit magnétique. Il comporte un capteur de courant 10 préférentiellement constitué d'un circuit magnétique 11 de forme sensiblement toroïdale traversé par les conducteurs de la ligne de courant 5. Les conducteurs de la ligne de courant 5 se comportent ainsi comme l'équivalent d'un enroulement primaire. Le circuit magnétique 11 comporte un enroulement secondaire 12. Un générateur 13 est connecté aux bornes de l'enroulement secondaire 12. Ledit générateur peut être auto-oscillant ou à fréquence fixe. Il délivre un signal électrique de fréquence Fosc créant un courant Ig qui est appliqué dans l'enroulement secondaire 12. La figure 2a représente un exemple d'un tel courant Ig en l'absence d'un courant de défaut. Le courant Ig induit un champ magnétique dans le circuit magnétique 11.

Le signal électrique délivré est préférentiellement un signal alternatif c'est-à-dire alternativement appliqué selon un sens puis selon le sens opposé, symétriquement, à la fréquence F_{osc}. Ledit signal électrique est préférentiellement de forme rectangulaire mais il peut aussi être de forme carrée, sinusoïdale ou trapézoïdale.

Le dimensionnement du circuit magnétique 11, de l'enroulement secondaire 12 et du signal généré par le générateur 13 sont tels que le circuit magnétique 11 suit une phase de magnétisation P1 puis sature après un temps qui est fonction de la valeur de l'inductance de l'enroulement secondaire, des résistances série du générateur 13 et de l'enroulement secondaire 12. Au point de saturation P2, l'inductance du circuit magnétique 11 diminue et le courant Ig augmente fortement.

En présence d'un courant de défaut circulant dans la ligne de courant, il se produit un décalage du champ magnétique dans le circuit magnétique 11 qui se manifeste par une composante, proportionnelle au courant de défaut, superposée au courant Ig. La figure 2b représente un tel courant dissymétrique.

Dans le cas d'utilisation d'un générateur auto-oscillant, le générateur 13 inverse la polarité du signal généré dès la détection de saturation au point P2, c'est-à-dire quand le courant Ig augmente fortement. Lorsque le circuit magnétique est saturé par un champ qui n'est pas lié au fonctionnement du générateur 13, la phase de magnétisation P1 disparait. Il s'ensuit une augmentation de la fréquence dudit générateur. La figure 2c représente un tel courant. Cette augmentation de fréquence est ainsi un indicateur représentatif de saturation du circuit magnétique 11. Le dimensionnement du circuit magnétique est adapté pour que celui-ci ne soit pas saturé pour un courant de défaut égal au seuil de déclenchement le plus élevé. Une détection de la saturation du circuit magnétique sera donc une indication représentative de la présence d'un courant de défaut supérieur au seuil de déclenchement le plus élevé.

Dans le cas d'utilisation d'un générateur à fréquence fixe, le générateur 13 attend la fin de chaque demi-période pour inverser la polarité du signal généré. Cette dernière variante est plus simple à réaliser que dans le cas auto-oscillant mais ne permet pas d'utiliser la variation de la fréquence en tant qu'indicateur de l'état de saturation du circuit magnétique 11.

Selon le schéma bloc de la figure 1, un premier circuit 14 effectue une mesure du courant Ig. Le circuit de mesure 14 est connecté à un circuit de traitement 15 qui effectue de préférence un filtrage passe-bas 16 afin d'atténuer les composantes hautes fréquences contenues dans le signal de courant Ig, en particulier la composante à la fréquence d'oscillation F_{osc} puis effectue une comparaison entre la valeur de courant obtenue et un seuil déterminé au moyen d'un comparateur 17. En cas de dépassement du seuil, le comparateur 17 fournit un premier signal de défaut 18 indiquant la présence d'un courant de défaut.

La fréquence de coupure F_{c} du filtre passe-bas 16 est préférentiellement de 150 Hz.

Le seuil de basculement du comparateur 17 est déterminé pour un courant de défaut dans la ligne de courant supérieur par exemple à 30 mA ou 100 mA ou 500 mA, ces valeurs étant non limitatives.

Préférentiellement, la fréquence d'oscillation F_{osc} est choisie supérieure à la fréquence du réseau d'alimentation électrique 1, par exemple de l'ordre de 2 kHz, cette valeur étant non limitative. Dans le cas du choix d'un générateur 13 auto-oscillant, la fréquence d'oscillation Fosc est fonction principalement de la valeur de l'inductance de l'enroulement secondaire 12 et de la somme des résistances série du générateur 13 et de l'enroulement secondaire 12. Ces composants sont choisis afin que la fréquence d'auto-oscillation Fosc soit celle désirée en l'absence de courant de défaut.

Au dessus d'un courant de défaut d'amplitude donnée Iₛₐₜ dans la ligne de courant 5, par exemple 10 A, le circuit magnétique 11 devient saturé et le courant Ig généré par le générateur 13 n'est pas suffisant pour créer un champ magnétique capable de compenser le champ magnétique généré par le courant de défaut. Dans ce cas, la self inductance de l'enroulement 12 diminue fortement et la fréquence d'auto-oscillation augmente pour atteindre une fréquence située dans une bande de fréquence Fsat très supérieure à F_{osc}. Par exemple, Fₛₐₜ = 30 à 50 kHz alors que F_{osc}= 2 kHz. La figure 2c représente un tel courant. En conséquence, le courant Ig étant un courant dont la fréquence est située dans la bande de fréquence Fₛₐₜ, le signal en sortie du filtre passe-bas 16 n'a pas l'amplitude suffisante pour faire basculer le comparateur 17. Le circuit de traitement 15 n'est donc pas en mesure de fournir un premier signal de défaut 18.

L'invention a donc pour but de remédier à cet inconvénient et porte sur la détection de ce changement de mode de fonctionnement de l'oscillateur et la détection de la saturation du circuit magnétique 11 afin de fournir un second signal de défaut 25.

Un capteur 21 effectue la mesure du courant Ig. Le capteur 21 est relié par une liaison 210 à un circuit de contrôle 22. Le circuit de contrôle 22 est agencé pour effectuer un ou plusieurs traitements de la mesure du courant Ig :
- une mesure de la fréquence du courant Ig, si la fréquence du courant Ig est située dans la bande de fréquence Fₛₐₜ, il s'agit d'une indication représentative d'une saturation du circuit magnétique et le circuit de contrôle fournit le second signal de défaut 25,
- une comparaison du courant Ig à un seuil Igₘᵢₙᵢ, par exemple 10 mA, si le courant Ig est inférieur à Igₘᵢₙᵢ, il s'agit d'une indication représentative d'un défaut du générateur 13 ou d'une rupture de l'enroulement 12 ou encore d'une rupture de la liaison entre le générateur 13 et l'enroulement 12, le circuit de contrôle fournit alors le second signal de défaut 25,
- une comparaison du courant Ig à un seuil Igₘₐₓᵢ, par exemple 30 mA, si le courant Ig est supérieur à Igₘₐₓᵢ, il s'agit d'une indication représentative d'une perturbation venant du réseau électrique et transmise par le circuit magnétique 11, le circuit de contrôle fournit le second signal de défaut 25.

Le circuit de contrôle 22 est agencé aussi pour effectuer une mesure de la tension aux bornes de l'enroulement secondaire (12) au moyen d'un capteur 23. La mesure de tension consiste à mesurer la différence de potentiel entre l'une des extrémités V1 de l'enroulement 12 et l'autre extrémité V2 de l'enroulement 12. Si la tension mesurée est inférieure à un seuil Vₘᵢₙ, par exemple 2 Volt, il s'agit d'une indication représentative d'une saturation du circuit magnétique, la self inductance de l'enroulement 12 ayant fortement diminué. Dans ce cas, le circuit de contrôle fournit le second signal de défaut 25.

Les traitements effectués par le circuit de contrôle 22 peuvent être menés isolément, en parallèle ou en combinaison. Le circuit de contrôle 22 peut être réalisé au moyen de circuits électroniques discrets, de fonctions programmées dans un microprocesseur ou tout autre moyen technique connu.

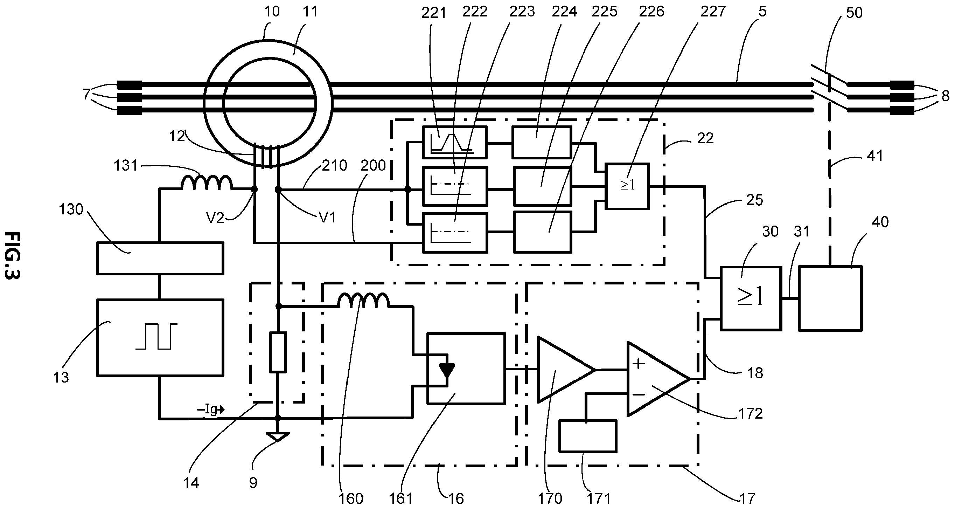

La figure 3 représente un schéma détaillé d'un appareil de protection différentielle comportant un dispositif de détection de courant de défaut selon le premier mode de réalisation de l'invention. L'appareil comporte des éléments de raccordement 7 au réseau électrique et des éléments de raccordement 8 à une ou plusieurs charges électriques. Ces éléments se présentent préférentiellement sous l'aspect de bornes à cage mais peuvent aussi être des cosses ou des soudures. Un dispositif de coupure 50 de la ligne de courant est disposé entre les éléments de raccordement 7 et 8. Le dispositif de coupure 50 comporte des contacts électriques ayant la capacité d'interrompre le courant circulant entre les éléments de raccordement 7 et 8. Le dispositif de coupure 50 est actionné par un mécanisme de commande d'ouverture des contacts électriques 40 au moyen d'une liaison mécanique 41. Le mécanisme de commande 40 est préférentiellement un actionneur électromagnétique.

Le mécanisme de commande 40 est activé par un état ou une transition vers un état actif de la sortie 31 du circuit 30. Le circuit 30 réalise une fonction « OU » logique entre ses deux entrées connectées au premier signal de défaut 18 et au second signal de défaut 25. Ainsi, en présence du premier ou du second signal de défaut ou en présence simultanée des deux signaux de défaut, la sortie 31 active le mécanisme de commande 40, ledit mécanisme de commande 40 actionnant le dispositif de coupure 50 de la ligne de courant 5. Le courant de défaut ne peut donc plus circuler entre le réseau électrique 1 et la ou les charges 3. La sécurité des biens et des personnes est ainsi assurée.

De préférence, une inductance 131 est connectée en série entre le générateur 13 et l'enroulement 12 afin de maîtriser la fréquence du générateur 13 en mode auto-oscillant, lorsque le circuit magnétique 11 est saturé. Quand le circuit magnétique 11 est saturé, son inductance devient négligeable comparée à l'inductance 131. La fréquence d'auto-oscillation dans la bande de fréquence Fsat est donc fonction de la valeur de l'inductance 131 et des résistances série du générateur 13 et de l'enroulement secondaire 12. La fréquence d'auto-oscillation est ainsi rendue maîtrisable et peut être fixée à une valeur prédéfinie. La valeur de l'inductance 131 est préférentiellement de l'ordre de 1 mH, cette valeur étant non limitative, afin que la fréquence d'auto-oscillation soit dans la bande de fréquence Fsat située de préférentiellement entre 30 kHz et 50 kHz.

Un circuit limiteur de courant 130 est connecté en série entre le générateur 13 et l'enroulement secondaire 12 pour limiter le courant Ig délivré par le générateur quand le circuit magnétique 11 est saturé. Ainsi le courant ne peut dépasser un seuil Igₘₐₓᵢ ce qui permet de réduire la consommation en énergie de l'appareil et limiter l'échauffement interne. Le limiteur de courant 130 limite le courant en ajoutant une impédance en série quand le courant qui le traverse tend à dépasser le niveau Igₘₐₓᵢ. La valeur de Igₘₐₓᵢ est de l'ordre de 30 mA, cette valeur étant non limitative.

Le premier circuit de mesure du courant 14 est constitué préférentiellement d'un shunt ou résistance. En variante, il peut être constitué d'un capteur à effet Hall, de magnétorésistance géante (GMR) ou de magnéto-impédance géante (GMI). Le circuit de traitement 15 comporte un circuit de filtrage 16 constitué par une inductance 160 en série avec un convertisseur courant-tension 161. L'inductance 160 a préférentiellement une valeur de 10 mH. L'utilisation préférentielle du convertisseur courant-tension 161 permet de garantir une très bonne réjection des fréquences élevées, tout particulièrement la fréquence Fosc, parce qu'il présente une impédance de charge minimale. Ainsi, la composante continue et les composantes basse fréquence du courant Ig circuleront principalement au travers de l'inductance 160 et du convertisseur courant-tension 161 plutôt que dans le shunt 14.

La sortie du convertisseur courant-tension 161 est connectée à un amplificateur 170. La sortie de l'amplificateur 170 est connectée à une entrée positive du comparateur 172. Le comparateur 172 effectue la comparaison entre le signal délivré par la sortie de l'amplificateur 170 et un seuil fixe 171. Quand le signal en sortie de l'amplificateur 170 est supérieur au seuil 171, la sortie du comparateur 172 bascule dans un état actif ce qui constitue le premier signal de défaut 18. L'amplificateur 170 permet d'ajuster le niveau de signal afin que l'émission du premier signal de défaut corresponde à un courant de défaut spécifique, par exemple 30 mA ou 300 mA ou 5A, ces valeurs n'étant pas limitatives.

Les composants 170, 171 et 172 font partie du circuit comparateur 17 fournissant le premier signal de défaut 18.

Les circuits 16 et 17 peuvent être réalisés au moyen de circuits électroniques analogiques comme des amplificateurs opérationnels ou numériques comme des microprocesseurs.

Le circuit de contrôle 22 est agencé pour contrôler le signal électrique délivré par le générateur 13 et pour fournir un second signal de défaut 25 en cas de perturbation du signal électrique lié à une saturation du circuit magnétique 11 ou un défaut du générateur 13. Selon le mode de réalisation représenté en figure 3, la mesure du courant Ig est obtenue par une connexion sur le capteur 14 au moyen de la liaison 210. On économise ainsi le coût et l'encombrement d'un capteur de courant 21.

Un contrôle de la fréquence du signal électrique délivré par le générateur 13 est réalisé par un circuit de mesure de fréquence 221 dont l'entrée est reliée au capteur 14 par la liaison 210 et dont la sortie est reliée à l'entrée d'un circuit comparateur 224. La sortie du comparateur 224 est reliée à une des entrées d'un circuit 227 effectuant un « OU » logique de toutes ses entrées. La sortie 25 du circuit 227 sera active si une ou plusieurs de ses entrées sont actives.

Le circuit 221 effectue une mesure de la fréquence du courant Ig. Le comparateur 224 active sa sortie quand la fréquence du courant Ig est située dans la bande de fréquence Fₛₐₜ ce qui est représentatif d'une saturation du circuit magnétique 11. La sortie du comparateur 224 est reliée à une des entrées du circuit 227 effectuant le « OU » logique de toutes ses entrées. Lorsque le comparateur 224 active sa sortie, la sortie du circuit 227 est donc activée ce qui fournit le second signal de défaut 25.

Le circuit de contrôle 22 comprend un ensemble de modules 222, 225 agencés pour contrôler le niveau de courant émis par le générateur 13. Le module 222 est un circuit de mesure dont l'entrée est reliée au capteur 14 par la liaison 210 et dont la sortie est reliée à l'entrée d'un circuit comparateur 225. Dans les cas ou le capteur 14 est un shunt, la mesure du courant est réalisée par mesure de la tension entre la liaison 210 et une référence de potentiel 9. Cette référence de potentiel 9 est utilisée également par les différents modules de mesure et de traitement du dispositif. La sortie du comparateur 225 est reliée à une des entrées du circuit 227 effectuant le « OU » logique de toutes ses entrées. Le module 222 effectue la mesure du courant Ig sur une large plage de fréquence. Le module 225 compare le niveau de signal mesuré par le module 222 à un seuil de courant minimal Igₘᵢₙᵢ. Quand le courant Ig est inférieur à Igₘᵢₙᵢ, il s'agit d'un défaut du générateur 13 ou d'une rupture de l'enroulement 12 ou encore une rupture de la liaison entre le générateur 13 et l'enroulement 12. Dans ce cas, la sortie du comparateur 225 est activée. La sortie du comparateur 225 est reliée à une des entrées d'un circuit 227 effectuant le « OU » logique de toutes ses entrées. Quand la sortie du comparateur 225 est activée, la sortie du circuit 227 est donc activée ce qui fournit le second signal de défaut 25. La valeur de Igₘᵢₙᵢ est de l'ordre de 10 mA, cette valeur étant non limitative.

Il est possible d'ajouter d'autres fonctions au module 22 notamment une comparaison de la mesure du courant Ig à un seuil de courant maximal Igₘₐₓᵢ représentatif d'une perturbation venant du réseau électrique et transmise par le circuit magnétique 11. Dans ce cas, le module 22 fournit le second signal de défaut 25. La valeur de Igₘₐₓᵢ est de l'ordre de 30 mA, cette valeur étant non limitative.

Le circuit de contrôle 22 comprend un module de mesure de tension 223 dont une des entrées est connectée à une des extrémités V2 de l'enroulement 12 par la liaison 200 et dont l'autre entrée est connectée à l'autre des extrémités V1 de l'enroulement 12 par la liaison 210. Le module de mesure de tension 223 mesure ainsi une tension différentielle aux bornes de l'enroulement 12. La sortie du module de mesure de tension 223 est connectée à l'entrée d'un module de comparaison à un seuil 226. La sortie du module de comparaison 226 est connectée à une des entrées du circuit 227.

Quand la tension du signal électrique aux bornes de l'enroulement secondaire (12) mesurée par le module 223 est inférieure à un seuil Vₘᵢₙ, il s'agit d'une saturation du circuit magnétique se caractérisant par une faible self inductance de l'enroulement 12. Le courant demandé devient supérieur ou égal à Igₘₐₓᵢ, le générateur n'ayant pas la capacité à fournir un courant Ig de compensation suffisante, le limiteur de courant 130 ajoute une impédance en série afin de limiter le courant à un niveau Igₘₐₓᵢ. Dans ce cas, la sortie du module de comparaison 226 est activée et en conséquence, la sortie du circuit 227 est activée ce qui fournit le second signal de défaut 25.

Les traitements effectués par les circuits 221, 222, 223, 224, 225, 226 du module de contrôle 22 peuvent être menés isolément, en parallèle ou en combinaison, au moyen de circuits électroniques analogiques comme des amplificateurs opérationnels ou numériques comme des microprocesseurs.

Les différents seuils Igₘₐₓᵢ, Igₘᵢₙᵢ, Fₛₐₜ, Vₘᵢₙ, sont préférentiellement fixés par construction du dispositif mais peuvent aussi être rendus paramétrables par réglage en production, ajustage au moyen de bouton de réglage implantés en face avant du dispositif, ou au moyen d'un dispositif de communication, par exemple NFC (« Near Field Communication »), non représenté sur la figure 3.

Les circuits 13, 16, 17, 21, 30, 40 sont alimentés en énergie par un module d'alimentation, non représenté sur la figure 3, prélevant l'énergie préférentiellement sur la ligne de courant 5.

Le signal de défaut 25 peut être utilisé pour activer un dispositif de signalisation de défaut tel qu'un voyant ou une sirène, ou un relais de commande vers un dispositif de signalisation ou encore activer un module de communication filaire ou radio afin d'envoyer un message vers un dispositif de supervision de l'installation électrique. Ce mode d'utilisation est bien adapté au cas de la surveillance d'un courant de défaut dans la liaison terre 2 à l'intérieur d'un poste de transformation de tension situé en site isolé. Dans ce cas, la ligne de courant 5 comporte un seul conducteur de courant.

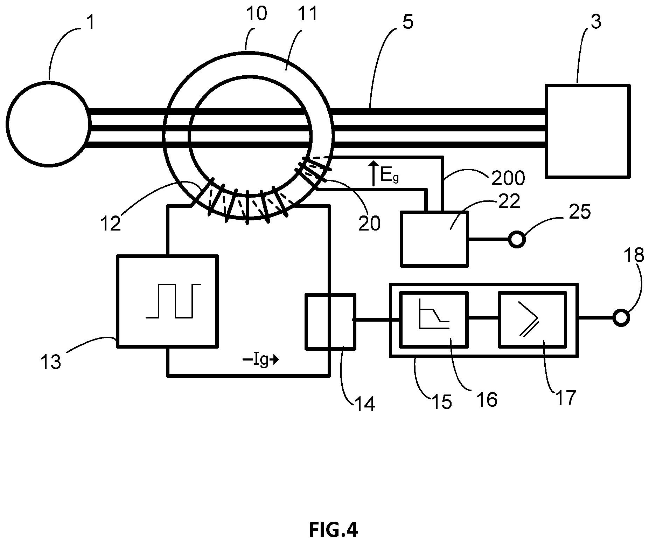

La figure 4 représente sous forme de schéma bloc un dispositif de détection de courant de défaut selon un second mode de réalisation de l'invention. Dans ce mode de réalisation, la détection de la saturation du circuit magnétique 10 est assurée par la mesure de la variation de flux Φ_{g} dans ledit circuit magnétique au moyen d'un capteur de flux 20. Préférentiellement, le capteur de flux 20 est un enroulement bobiné sur le circuit magnétique 11. Il comporte N₂₀ spires, N₂₀ étant préférentiellement égal au nombre de spires N₁₂ de l'enroulement 12. Préférentiellement N₁₂ = N₂₀ = 50. Une variation du flux Φ_{g} dans le circuit magnétique 11 induit une tension E_{g} aux bornes du second enroulement du capteur de flux 20 telle que: E_{g}= N₂₀ . dΦ_{g}/dt (où Φ_{g} est le flux magnétique et t le temps). Par exemple, une mesure de la valeur crête de la tension E_{g} est représentative de la variation de flux Φ_{g}. Le capteur 20 est relié par une liaison 200 à un circuit de contrôle 22. Le circuit de contrôle 22 est agencé pour effectuer un ou plusieurs traitements de la mesure de la tension E_{g} tels que :
- la mesure de la fréquence de la tension E_{g}, si ladite fréquence est située dans la bande de fréquence Fₛₐₜ, il s'agit d'une saturation du circuit magnétique, le circuit de contrôle 22 fournit le second signal de défaut 25 ;
- la comparaison à un seuil Egₘᵢₙᵢ, si la tension Eg est inférieure à Egₘᵢₙᵢ, il s'agit de la saturation du circuit magnétique 11 ou d'un défaut du générateur 13 ou d'une rupture de l'enroulement 12 ou encore une rupture de la liaison entre le générateur 13 et l'enroulement 12 et dans ce cas, le circuit de contrôle 22 fournit le second signal de défaut 25 ;
- la comparaison à un seuil Egₘₐₓᵢ, si la tension Eg est supérieure à Egₘₐₓᵢ, il s'agit d'une perturbation venant du réseau électrique, transmise par le circuit magnétique 11, le circuit de contrôle 22 fournit le second signal de défaut 25. Préférentiellement la valeur crête de Egₘᵢₙᵢ = 2 Volt.

Préférentiellement la valeur crête de Egₘₐₓᵢ = 4 Volt.

Les traitements effectués par le circuit de contrôle 22 peuvent être menés isolément, en parallèle ou en combinaison. Le circuit de contrôle 22 peut être réalisé au moyen de circuits électroniques discrets, de fonctions programmées dans un microprocesseur ou tout autre moyen technique connu.

Le capteur de flux 20 et le circuit de contrôle 22 sont fonctionnellement indépendants des circuits 14 et 15. N'ayant pas de circuit commun, cette configuration du dispositif apporte une plus grande fiabilité.

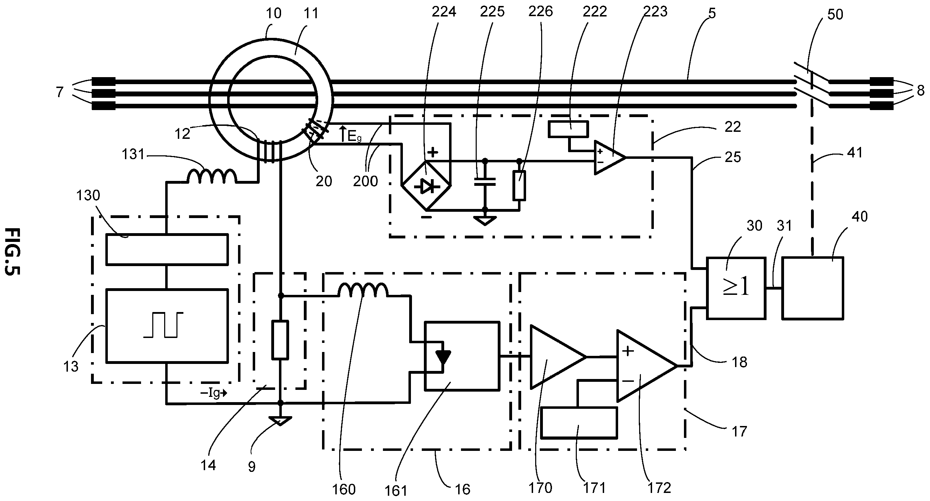

La figure 5 représente un schéma détaillé d'un dispositif de protection différentielle selon le second mode de réalisation de l'invention.

Le capteur de flux 20 est un enroulement supplémentaire bobiné sur le circuit magnétique 11. Ledit capteur constitue un capteur de flux du circuit magnétique 11 et la tension E_{g} à ses bornes est représentative de la variation de flux Φ_{g}. dans le circuit magnétique. Quand le circuit magnétique 11 est saturé, la variation dΦ_{g}/dt est faible, la tension E_{g} est proche de zéro. Le capteur 20 est connecté aux entrées alternatives d'un pont de diode 224. Le pont de diode 224 redresse le signal alternatif fourni par le capteur 20. Un condensateur 225 est connecté entre les sorties positive et négative du pont de diode 224. Une résistance 226 connectée en parallèle sur le condensateur 225 assure la décharge dudit condensateur lorsque la tension E_{g} est faible. La sortie positive du pont de diode 224 est reliée à l'entrée négative du comparateur 223. Ledit comparateur 223 compare la tension entre son entrée négative est son entrée positive reliée au seuil 222, égal à Egₘᵢₙᵢ, et active la sortie 25 lorsque la tension sur son entrée négative est inférieure au seuil 222.

Ainsi, quand le circuit magnétique 11 est saturé, la tension E_{g} est proche de zéro, la tension aux bornes du condensateur 225 est proche de zéro, la sortie du comparateur 223 devient active et fournit le second signal de défaut 25.

Le fonctionnement du dispositif est identique si le générateur 13 est en défaut ou dans le cas d'une rupture de l'enroulement 12 ou encore d'une rupture de la liaison entre le générateur 13 et l'enroulement 12.

La valeur de la résistance 226 est choisie pour que le temps de décharge du condensateur 225 soit inférieur à un temps T_{d}. Ainsi, lors de l'apparition d'un courant de défaut ou d'une défaillance interne du dispositif, la sortie du comparateur 223 devient active après un délai maximal T_{d} et, en conséquence, active le mécanisme de commande 40, ledit mécanisme actionnant le dispositif de coupure 50 de la ligne de courant 5. L'élimination du courant de défaut a ainsi une durée proche de T_{d}. Le temps T_{d} est préférentiellement déterminé pour être en conformité avec un temps maximal de déclenchement normatif. Ce temps est préférentiellement de 40 ms.

En variante, afin de réduire le coût du dispositif ou son encombrement, le pont de diode 224 peut être remplacé par une diode de redressement connectée entre une des bornes du capteur 20 et une des bornes du condensateur 225, l'autre borne du capteur 20 étant reliée à l'autre des bornes du condensateur 225.

Tout en étant très simple, le circuit de contrôle 22 selon ce mode de réalisation permet de détecter une saturation du circuit magnétique et donc la présence d'un courant de défaut important dans la ligne de courant 5 ou permet la détection d'une défaillance interne du dispositif. Le capteur 20 et le circuit de contrôle 22 étant indépendants des circuits de mesure 14, de filtrage 16 et de comparaison 17, la fiabilité du dispositif est accrue.

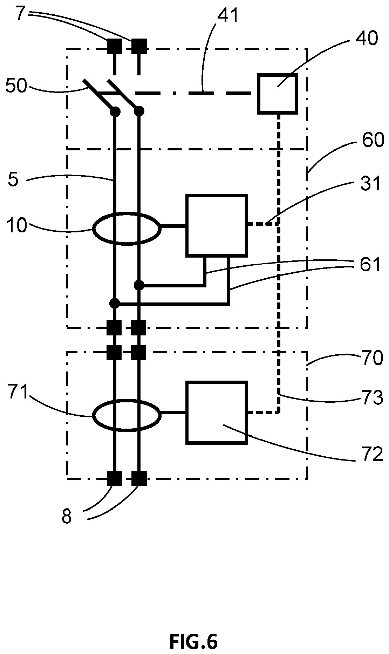

La figure 6 représente, sous forme de schéma bloc, un ensemble de protection différentielle selon l'invention. L'ensemble est composé d'un premier module 70 de protection différentielle comportant un capteur de courant 71 dans lequel passe la ligne de courant 5 composée de deux conducteurs électriques, par exemple un conducteur de phase et un conducteur de neutre, ledit capteur 71 étant connecté à un module de traitement 72. Le module de traitement 72 mesure le niveau courant de défaut différentiel et fournit un signal de défaut 73 quand le niveau de courant de défaut dépasse un seuil.

Le module 70 est préférentiellement un module sensible au courant de défaut alternatif pur ou sensible au courant de défaut alternatif et pulsé. Il est peu sensible au courant de défaut continu ou au courant de défaut de fréquence très inférieure à la fréquence du réseau d'alimentation électrique 1. Le module 70 est préférentiellement autoalimenté en énergie pas son capteur 71, celui-ci fournissant l'énergie nécessaire au fonctionnement du module de traitement 72 et à l'activation du signal de défaut 73.

Le module 60 est préférentiellement un module comprenant le dispositif de l'invention. Il active le signal de défaut 31 en présence d'un courant de défaut dépassant un seuil fixé ou en cas de détection de la saturation du circuit magnétique du capteur 10. L'alimentation en énergie pour le fonctionnement du module 60 est réalisée par une connexion aux conducteurs de la ligne de courant 5 au moyen des liaisons 61.

Les signaux de défaut 31 et 73 activent le mécanisme de commande d'ouverture des contacts électriques 50 au moyen d'une liaison mécanique 41.

La connexion de la ligne de courant 5 entre les modules 60 et 70 peut être réalisée par raccordement filaire, par peigne de connexion, par connecteur ou être soudée.

En variante, un mécanisme de commande 40 peut être implanté dans le module 60 et un second mécanisme de commande 40 peut être implanté dans le module 70, chaque mécanisme de commande 40 pouvant actionner la liaison mécanique 41.

En autre variante, le module 60 peut être un dispositif de protection différentielle selon l'invention auquel est associé un module 70 de détection de courant de défaut alternatif pur ou de courant de défaut alternatif et pulsé.

Cet ensemble de protection différentielle a pour avantage de procurer une protection contre les courants alternatifs purs, les courants continus purs et tous les courants pulsés par la combinaison des propriétés de chacun des dispositifs de protection différentielle qui le compose. Sa modularité permet de réduire le nombre de références commerciales puisqu'avec une base de deux ensembles, il est possible de réaliser trois produits aux caractéristiques différentes.

Le dispositif selon l'invention est particulièrement destiné à la protection des personnes et des biens contre les courants de défaut différentiels alternatifs dans une large plage de fréquence incluant la fréquence du réseau électrique, et contre les courants de défaut différentiels continus ou puisés. Le circuit de contrôle 22 permet la détection de saturation du circuit magnétique 11 du capteur de courant 10. Ainsi, même en présence d'un très fort niveau de courant de défaut, le dispositif selon l'invention est en mesure d'assurer l'ouverture des contacts électriques 50 afin de couper le courant de défaut. De plus, selon le mode de réalisation préférentiel du circuit de contrôle 22, toute anomalie de fonctionnement interne du générateur 13 est décelée ce qui génère un signal de défaut 22. La sûreté de fonctionnement du dispositif est ainsi supérieure à celle des dispositifs décrits dans l'art antérieur.

## Revendications

1. Dispositif de détection d'un courant de défaut circulant dans une ligne de courant (5), comprenant :
- un capteur de courant (10) formé d'un circuit magnétique (11) traversé par la ligne de courant (5), celle-ci formant un primaire, ledit capteur comportant au moins un premier enroulement secondaire (12) bobiné sur le circuit magnétique (11),
- un générateur (13) connecté au premier enroulement secondaire (12) pour lui délivrer un signal électrique alternatif,
- un circuit de mesure (14) pour mesurer un courant circulant dans l'enroulement secondaire (12),
- un circuit de traitement (15), connecté au circuit de mesure du courant (14), pour fournir un premier signal de défaut (18) lorsque ladite mesure du courant dépasse un seuil,
**caractérisé en ce que** ledit dispositif comporte un circuit de contrôle (22) :
- pour contrôler le signal électrique délivré par le générateur, et
- pour fournir un second signal de défaut (25) lorsque ledit signal électrique est représentatif d'une saturation du circuit magnétique (11).

2. Dispositif selon la revendication 1 **caractérisé en ce que** le dispositif détecte une saturation du circuit magnétique (11) représentative d'un courant de défaut d'amplitude supérieure à un seuil de saturation (Iₛₐₜ).

3. Dispositif selon l'une des revendications 1 ou 2 **caractérisé en ce que** le circuit de contrôle (22) mesure l'amplitude (I_{g}) du courant du signal électrique délivré par le générateur et fournit le second signal de défaut (25) représentatif d'une saturation du circuit magnétique quand ladite amplitude (I_{g}) est supérieure ou égale à un seuil haut (Igₘₐₓᵢ).

4. Dispositif selon l'une des revendications précédentes **caractérisé en ce que** le circuit de contrôle (22) mesure la tension du signal électrique aux bornes de l'enroulement secondaire (12) et fournit le second signal de défaut (25) représentatif d'une saturation du circuit magnétique quand ladite tension est inférieure ou égale à un seuil bas (Vₘᵢₙ).

5. Dispositif selon l'une des revendications précédentes **caractérisé en ce que** le circuit de contrôle (22) mesure la fréquence du signal électrique délivré par le générateur et fournit le second signal de défaut (25) représentatif d'une saturation du circuit magnétique quand ladite fréquence est située dans une bande de fréquences (Fₛₐₜ) prédéfinies.

6. Dispositif selon l'une des revendications précédentes **caractérisé en ce que** le circuit de contrôle (22) mesure l'amplitude du courant du signal électrique délivré par le générateur et fournit le second signal de défaut (25) représentatif d'un défaut du générateur quand ladite amplitude est inférieure à un seuil bas (Igₘᵢₙᵢ).

7. Dispositif selon l'une des revendications précédentes **caractérisé en ce que** le circuit de contrôle (22) mesure une variation de flux en fonction du temps dans le circuit magnétique (11) et fournit le second signal de défaut (25) représentatif d'une saturation du circuit magnétique quand ladite variation de flux est inférieure à un seuil bas (Egₘᵢₙᵢ).

8. Dispositif selon la revendication 7 **caractérisé en ce que** la mesure de la variation de flux dans le circuit magnétique (11) est réalisée au moyen d'un second enroulement secondaire (20) bobiné sur le circuit magnétique (11).

9. Dispositif selon l'une des revendications précédentes **caractérisé en ce qu'**il comporte un limiteur de courant limitant l'amplitude (I_{g}) du courant du signal électrique délivré par le générateur (13) à une valeur haute (Igₘₐₓᵢ).

10. Dispositif selon l'une des revendications précédentes **caractérisé en ce que** le générateur (13) est auto-oscillant.

11. Dispositif selon la revendication 10 **caractérisé en ce qu'**il comporte une inductance (131) connectée en série entre le générateur (13) et le premier enroulement secondaire (12) pour fixer la fréquence d'oscillation du générateur (F_{osc}) dans la bande de fréquence (Fₛₐₜ) quand le circuit magnétique (11) est saturé.

12. Dispositif selon l'une des revendications précédentes **caractérisé en ce que** le second signal de défaut (25) active un dispositif de signalisation de défaut, un relais de commande ou un module de communication.

13. Appareil électrique de protection différentielle comportant :
- des éléments de raccordement (7) à un réseau électrique et des éléments de raccordement (8) à une ou plusieurs charges électriques,
- un dispositif de coupure (50) de la ligne de courant disposé entre les éléments de raccordement (7) au réseau électrique et les éléments de raccordement (8) de la ou des charges électriques, ledit dispositif de coupure comportant des contacts électriques, et
- un mécanisme de commande d'ouverture (40) des contacts électriques, **caractérisé en ce qu'**il comporte un dispositif de détection d'un courant de défaut selon l'une des revendications 1 à 12 et que le mécanisme de commande d'ouverture des contacts (40) est activé par le premier signal de défaut (18) ou par le second signal de défaut (25).

14. Ensemble de protection différentielle comportant :
- des éléments de raccordement (7) au réseau électrique et des éléments de raccordement (8) à une ou plusieurs charges électriques,
- un dispositif de coupure (50) de la ligne de courant disposé entre les éléments de raccordement (7) au réseau électrique et les éléments de raccordement (8) de la ou des charges électriques, ledit dispositif de coupure comportant des contacts électriques, et
- un mécanisme de commande d'ouverture (40) des contacts électriques, **caractérisé en ce que** ledit ensemble est formé par un assemblage :
- d'un premier dispositif de détection d'un courant de défaut (60) selon l'une des revendications 1 à 13,
- d'un second dispositif (70) de protection différentielle, agencé pour fournir un signal de défaut (73),
tel que le mécanisme de commande d'ouverture des contacts (40) est activé par le premier signal de défaut (18) ou par le second signal de défaut (25) du premier dispositif (60) ou par le signal de défaut (73) du second dispositif (70) de protection différentielle.

## Patentansprüche

1. Vorrichtung zur Detektion eines Fehlerstroms, der in einer Stromleitung (5) fließt, umfassend:
- einen Stromsensor (10), der aus einem Magnetkreis (11) gebildet ist, der von der Stromleitung (5) durchquert wird, wobei diese einen Primärkreis bildet, wobei der Sensor mindestens eine erste Sekundärwicklung (12) umfasst, die auf den Magnetkreis (11) gewickelt ist,
- einen Generator (13), der mit der ersten Sekundärwicklung (12) verbunden ist, um an diese ein elektrisches Wechselsignal zu liefern,
- einen Messkreis (14) zum Messen eines Stroms, der in der Sekundärwicklung (12) fließt,
- einen Verarbeitungskreis (15), der mit dem Strommesskreis (14) verbunden ist, um ein erstes Fehlersignal (18) zu liefern, wenn die Messung des Stroms einen Schwellenwert überschreitet,
**dadurch gekennzeichnet, dass** die Vorrichtung einen Überwachungskreis (22) umfasst:
- zum Überwachen des elektrischen Signals, das vom Generator geliefert wird, und
- zum Bereitstellen eines zweiten Fehlersignals (25), wenn das elektrische Signal repräsentativ für eine Sättigung des Magnetkreises (11) ist.

2. Vorrichtung nach Anspruch 1, **dadurch gekennzeichnet, dass** die Vorrichtung eine Sättigung des Magnetkreises (11) detektiert, die für einen Fehlerstrom mit einer über einem Sättigungsschwellenwert (Iₛₐₜ) liegenden Amplitude repräsentativ ist.

3. Vorrichtung nach einem der Ansprüche 1 oder 2, **dadurch gekennzeichnet, dass** der Überwachungskreis (22) die Amplitude (I_{g}) des Stroms des elektrischen Signals misst, das vom Generator geliefert wird, und das zweite Fehlersignal (25) bereitstellt, das für eine Sättigung des Magnetkreises repräsentativ ist, wenn die Amplitude (I_{g}) größer oder gleich einem oberen Schwellenwert (Igₘₐₓᵢ) ist.

4. Vorrichtung nach einem der vorhergehenden Ansprüche, **dadurch gekennzeichnet, dass** der Überwachungskreis (22) die Spannung des elektrischen Signals an den Anschlüssen der Sekundärwicklung (12) misst und das zweite Fehlersignal (25) bereitstellt, das für eine Sättigung des Magnetkreises repräsentativ ist, wenn die Spannung kleiner oder gleich einem unteren Schwellenwert (Vₘᵢₙ) ist.

5. Vorrichtung nach einem der vorhergehenden Ansprüche, **dadurch gekennzeichnet, dass** der Überwachungskreis (22) die Frequenz des elektrischen Signals misst, das vom Generator geliefert wird, und das zweite Fehlersignal (25) bereitstellt, das für eine Sättigung des Magnetkreises repräsentativ ist, wenn sich die Frequenz in einem Band vordefinierter Frequenzen (Fₛₐₜ) befindet.

6. Vorrichtung nach einem der vorhergehenden Ansprüche, **dadurch gekennzeichnet, dass** der Überwachungskreis (22) die Amplitude des Stroms des elektrischen Signals misst, das vom Generator geliefert wird, und das zweite Fehlersignal (25) bereitstellt, das für einen Fehler des Generators repräsentativ ist, wenn die Amplitude kleiner als ein unterer Schwellenwert ist (Igₘᵢₙᵢ).

7. Vorrichtung nach einem der vorhergehenden Ansprüche, **dadurch gekennzeichnet, dass** der Überwachungskreis (22) eine zeitabhängige Flussschwankung im Magnetkreis (11) misst und das zweite Fehlersignal (25) bereitstellt, das für eine Sättigung des Magnetkreises repräsentativ ist, wenn die Flussschwankung kleiner als ein unterer Schwellenwert (Egₘᵢₙᵢ) ist.

8. Vorrichtung nach Anspruch 7, **dadurch gekennzeichnet, dass** die Messung der Flussschwankung im Magnetkreis (11) mittels einer zweiten Sekundärwicklung (20) realisiert wird, die auf den Magnetkreis (11) gewickelt ist.

9. Vorrichtung nach einem der vorhergehenden Ansprüche, **dadurch gekennzeichnet, dass** sie einen Strombegrenzer umfasst, der die Amplitude (I_{g}) des Stroms des elektrischen Signals, das vom Generator (13) geliefert wird, auf einen oberen Wert (Igₘₐₓᵢ) begrenzt.

10. Vorrichtung nach einem der vorhergehenden Ansprüche, **dadurch gekennzeichnet, dass** der Generator (13) selbstschwingend ist.

11. Vorrichtung nach Anspruch 10, **dadurch gekennzeichnet, dass** sie eine Induktivität (131) umfasst, die zwischen dem Generator (13) und der ersten Sekundärwicklung (12) in Reihe geschaltet ist, um die Schwingungsfrequenz des Generators (F_{osc}) im Frequenzband (Fₛₐₜ) zu fixieren, wenn der Magnetkreis (11) gesättigt ist.

12. Vorrichtung nach einem der vorhergehenden Ansprüche, **dadurch gekennzeichnet, dass** das zweite Fehlersignal (25) eine Fehlersignalisierungsvorrichtung, ein Steuerrelais oder ein Kommunikationsmodul aktiviert.

13. Elektrische Differenzstromschutzeinrichtung, umfassend:
- Elemente zum Anschluss (7) an ein elektrisches Netz und Elemente zum Anschluss (8) an eine oder mehrere elektrische Lasten,
- eine Vorrichtung zur Unterbrechung (50) der Stromleitung, die zwischen den Elementen zum Anschluss (7) an das elektrische Netz und den Elementen zum Anschluss (8) an die elektrische(n) Last(en) angeordnet ist, wobei die Vorrichtung zur Unterbrechung elektrische Kontakte umfasst, und
- einen Steuermechanismus zur Öffnung (40) der elektrischen Kontakte,
**dadurch gekennzeichnet, dass** sie eine Vorrichtung zur Detektion eines Fehlerstroms nach einem der Ansprüche 1 bis 12 umfasst und dass der Steuermechanismus zur Öffnung der Kontakte (40) durch das erste Fehlersignal (18) oder durch das zweite Fehlersignal (25) aktiviert wird.

14. Differenzstromschutzanordnung, umfassend:
- Elemente zum Anschluss (7) an das elektrische Netz und Elemente zum Anschluss (8) an eine oder mehrere elektrische Lasten,
- eine Vorrichtung zur Unterbrechung (50) der Stromleitung, die zwischen den Elementen zum Anschluss (7) an das elektrische Netz und den Elementen zum Anschluss (8) an die elektrische(n) Last(en) angeordnet ist, wobei die Vorrichtung zur Unterbrechung elektrische Kontakte umfasst, und
- einen Steuermechanismus zur Öffnung (40) der elektrischen Kontakte,
**dadurch gekennzeichnet, dass** die Anordnung gebildet ist durch Zusammenbau:
- einer ersten Vorrichtung zur Erkennung eines Fehlerstroms (60) nach einem der Ansprüche 1 bis 13,
- einer zweiten Vorrichtung (70) zum Differenzstromschutz, die dazu eingerichtet ist, ein Fehlersignal (73) bereitzustellen,
so dass der Steuermechanismus zur Öffnung der Kontakte (40) durch das erste Fehlersignal (18) oder durch das zweite Fehlersignal (25) der ersten Vorrichtung (60) oder durch das Fehlersignal (73) der zweiten Vorrichtung (70) zum Differenzstromschutz aktiviert wird.

## Claims

1. Device for detecting a fault current flowing in a current line (5), comprising:
- a current sensor (10) formed of a magnetic circuit (11) passed through by the current line (5), this forming a primary, said sensor comprising at least one first secondary winding (12) wound on the magnetic circuit (11),
- a generator (13) connected to the first secondary winding (12) in order to deliver an AC electrical signal thereto,
- a measuring circuit (14) for measuring a current flowing in the secondary winding (12),
- a processing circuit (15), connected to the measuring circuit (14) for measuring the current, for supplying a first fault signal (18) when said measurement of the current exceeds a threshold,
**characterized in that** said device comprises a monitoring circuit (22):
- for monitoring the electrical signal delivered by the generator, and
- for supplying a second fault signal (25) when said electrical signal is representative of saturation of the magnetic circuit (11).

2. Device according to Claim 1, **characterized in that** the device detects saturation of the magnetic circuit (11) representative of a fault current of amplitude greater than a saturation threshold (Iₛₐₜ).

3. Device according to either of Claims 1 and 2, **characterized in that** the monitoring circuit (22) measures the amplitude (I_{g}) of the current of the electrical signal delivered by the generator and supplies the second fault signal (25) representative of saturation of the magnetic circuit when said amplitude (I_{g}) is greater than or equal to an upper threshold (Igₘₐₓᵢ).

4. Device according to one of the preceding claims, **characterized in that** the monitoring circuit (22) measures the voltage of the electrical signal across the terminals of the secondary winding (12) and supplies the second fault signal (25) representative of saturation of the magnetic circuit when said voltage is less than or equal to a lower threshold (Vₘᵢₙ).

5. Device according to one of the preceding claims, **characterized in that** the monitoring circuit (22) measures the frequency of the electrical signal delivered by the generator and supplies the second fault signal (25) representative of saturation of the magnetic circuit when said frequency is within a predefined frequency band (Fₛₐₜ).

6. Device according to one of the preceding claims, **characterized in that** the monitoring circuit (22) measures the amplitude of the current of the electrical signal delivered by the generator and supplies the second fault signal (25) representative of a fault of the generator when said amplitude is less than a lower threshold (Igₘᵢₙᵢ).

7. Device according to one of the preceding claims, **characterized in that** the monitoring circuit (22) measures a flux variation as a function of time in the magnetic circuit (11) and supplies the second fault signal (25) representative of saturation of the magnetic circuit when said flux variation is less than a lower threshold (Egₘᵢₙᵢ).

8. Device according to Claim 7, **characterized in that** the flux variation in the magnetic circuit (11) is measured by way of a second secondary winding (20) wound on the magnetic circuit (11).

9. Device according to one of the preceding claims, **characterized in that** it comprises a current limiter that limits the amplitude (I_{g}) of the current of the electrical signal delivered by the generator (13) to an upper value (Igₘₐₓᵢ).

10. Device according to one of the preceding claims, **characterized in that** the generator (13) is a self-oscillating generator.

11. Device according to Claim 10, **characterized in that** it comprises an inductor (131) connected in series between the generator (13) and the first secondary winding (12) in order to set the oscillating frequency of the generator (F_{osc}) within the frequency band (Fₛₐₜ) when the magnetic circuit (11) is saturated.

12. Device according to one of the preceding claims, **characterized in that** the second fault signal (25) activates a fault-signalling device, a control relay or a communication module.

13. Differential electrical protection unit comprising:
- connection elements (7) for connection to an electrical network and connection elements (8) for connection to one or more electrical loads,
- a disconnection device (50) for disconnecting the current line, arranged between the connection elements (7) for connection to the electrical network and the connection elements (8) for connection to the one or more electrical loads, said disconnection device comprising electrical contacts, and
- an opening control mechanism (40) for controlling opening of the electrical contacts,
**characterized in that** it comprises a device for detecting a fault current according to one of Claims 1 to 12 and that the opening control mechanism (40) for controlling opening of the contacts is activated by the first fault signal (18) or by the second fault signal (25).

14. Differential protection assembly comprising:
- connection elements (7) for connection to the electrical network and connection elements (8) for connection to one or more electrical loads,
- a disconnection device (50) for disconnecting the current line, arranged between the connection elements (7) for connection to the electrical network and the connection elements (8) for connection to the one or more electrical loads, said disconnection device comprising electrical contacts, and
- an opening control mechanism (40) for controlling opening of the electrical contacts,
**characterized in that** said assembly is formed by assembling the following:
- a first device (60) for detecting a fault current according to one of Claims 1 to 13,
- a second differential protection device (70), designed to supply a fault signal (73),
such that the opening control mechanism (40) for controlling opening of the contacts is activated by the first fault signal (18) or by the second fault signal (25) from the first device (60) or by the fault signal (73) from the second differential protection device (70).
